# FASCICULE DE BREVET EUROPEEN

(11) **EP 3 462 000 B1**
(45) Date de publication et mention de la délivrance du brevet: **05.08.2020**
(21) Numéro de dépôt: 18306267.8
(22) Date de dépôt: 27.09.2018
(51) Int. Cl.: F01D 25/16, F01D 25/18, F02C 7/06

(54) **ENSEMBLE D'UN SUPPORT PALIER ET DES PALIERS D'UN ARBRE DE ROTOR DANS UNE TURBOMACHINE**
ANORDNUNG EINES LAGERTRÄGERS UND LAGER EINER ROTORWELLE IN EINEM TURBOTRIEBWERK
ASSEMBLY COMPRISING BEARING SUPPORT AND BEARINGS OF A ROTOR SHAFT IN A TURBINE ENGINE

(30) Priorité: 27.09.2017 FR 1758954
(43) Date de publication de la demande: 03.04.2019
(73) Titulaire: SAFRAN AIRCRAFT ENGINES, 75015 Paris (FR)
(72) Inventeur: PATSOURIS, Emmanuel Pierre Dimitri, 77550 Moissy-Cramayel (FR); NEGRI, Arnaud Nicolas, 77550 Moissy-Cramayel (FR)
(74) Mandataire: Regimbeau

(56) Documents cités:
- WO-A1-2015/094607
- WO-A1-2017/158296
- FR-A1- 3 005 099
- US-A- 4 428 713

## Description

### DOMAINE DE L'INVENTION

La présente invention concerne un ensemble comprenant des paliers d'un arbre de rotor et un support palier, au sein d'une turbomachine, et tout particulièrement au sein d'un turboréacteur à double flux.

### ETAT DE LA TECHNIQUE

Dans le cas d'une turbomachine de type turboréacteur à double flux, ce dernier comprend généralement, d'amont en aval dans le sens de l'écoulement des gaz, une soufflante carénée et logée dans un carter de soufflante, un espace annulaire d'écoulement primaire et un espace annulaire d'écoulement secondaire. La masse d'air aspirée par la soufflante est donc divisée en un flux primaire, qui circule dans l'espace d'écoulement primaire, et en un flux secondaire, qui est concentrique avec le flux primaire et circule dans l'espace d'écoulement secondaire.

L'espace d'écoulement primaire traverse un corps primaire comprenant un ou plusieurs étages de compresseurs, par exemple un compresseur basse pression et un compresseur haute pression, une chambre de combustion, un ou plusieurs étages de turbines, par exemple une turbine haute pression et une turbine basse pression, et une tuyère d'échappement des gaz.

Typiquement, la turbine haute pression entraine en rotation le compresseur haute pression par l'intermédiaire d'un premier arbre, dit arbre haute pression, tandis que la turbine basse pression entraine en rotation le compresseur basse pression et la soufflante par l'intermédiaire d'un deuxième arbre, dit arbre basse pression. L'arbre basse pression est généralement logé dans l'arbre haute pression, lesdits arbres étant supportés et guidés en rotation par des paliers fixés aux parties structurales du turboréacteur.

Afin d'améliorer le rendement propulsif du turboréacteur et de réduire sa consommation spécifique ainsi que le bruit émis par la soufflante, il a été proposé des turboréacteurs présentant un taux de dilution, « bypass ratio » en anglais, qui correspond au rapport entre le débit du flux secondaire (froid) et le débit du flux primaire (chaud, qui traverse le corps primaire) élevé.

Pour atteindre de tels taux de dilution, la soufflante est découplée de la turbine basse pression, permettant ainsi d'optimiser indépendamment leur vitesse de rotation respective.

Par exemple, le découplage peut être réalisé à l'aide d'un réducteur tel qu'un mécanisme de réduction épicycloïdal (« planetary gear reduction mecanism » en anglais) ou planétaire (« star gear reduction mecanism » en anglais), placé entre l'extrémité amont (par rapport au sens d'écoulement des gaz dans le turboréacteur) de l'arbre basse pression et la soufflante. La soufflante est alors entrainée par l'arbre basse pression par l'intermédiaire du mécanisme de réduction et d'un arbre supplémentaire, dit arbre de soufflante, qui est fixé entre le mécanisme de réduction et le disque de la soufflante.

Ce découplage permet ainsi de réduire la vitesse de rotation et le rapport de pression de la soufflante (« fan pressure ratio » en anglais), et d'augmenter la vitesse de la turbine basse pression. Une vitesse de turbine basse pression plus grande permet d'augmenter l'efficacité de la turbine basse pression par étage et ainsi de réduire le nombre d'étage de turbine basse pression. Grâce au mécanisme de réduction, l'arbre basse pression peut tourner à des vitesses de rotation plus élevées que dans les turboréacteurs conventionnels.

Les arbres haute et basse pression sont reliés aux parties structurales du turboréacteur par l'intermédiaire de paliers, les paliers étant eux-mêmes soutenus par leurs supports paliers respectifs.

Le turboréacteur comprend en outre de manière classique un engrenage configuré pour prélever la puissance sur l'arbre haute pression.

Ces différents paliers ainsi que le mécanisme de réduction et l'engrenage doivent être lubrifiés et refroidis. A cet effet, le turboréacteur comprend généralement un groupe de lubrification alimentant un circuit d'huile fermé, des enceintes dans lesquelles circule de l'huile permettant de faire fonctionner les éléments roulants des paliers, le mécanisme de réduction, et l'engrenage, ainsi qu'un appareillage comprenant notamment des gicleurs configurés pour injecter de l'huile dans les enceintes et des pompes de récupération configurées pour recycler l'huile qui a été injectée dans les enceintes. C'est notamment le cas des structures de turbomachine décrites dans les documents WO 2017/158296, US 4,428,713, et FR 3005099.

En pratique, chaque équipement (c'est-à-dire chaque palier et le mécanisme de réduction) est logé dans une enceinte de lubrification à laquelle est associé un appareillage, c'est-à-dire en particulier un gicleur et une pompe de récupération d'huile.

Il est en particulier obligatoire de prévoir une enceinte par équipement dans le cas où les paliers sont séparés par un tourillon, ce dernier présentant une structure telle qu'il ne peut être contenu dans une enceinte. Le document FR2896827 décrit notamment un assemblage d'un arbre de turbine avec un tourillon d'arbre de compresseur.

Les paliers sont munis d'une bague interne et d'une bague externe, coaxiales avec l'axe X du turboréacteur. Des éléments roulant sont interposés entre la bague externe et la bague interne du palier et permettent la rotation de l'arbre soutenu par le palier. Les paliers sont disposés dans les enceintes de lubrification dont la forme est sensiblement annulaire. Les arbres haute et basse pression sont situés au centre de la turbomachine et sont entourés par les éléments structuraux de celle-ci. La bague externe des paliers est montée sur les éléments structuraux du turboréacteur, notamment différents carters, et est fixe par rapport auxdits éléments structuraux, tandis que la bague interne des paliers est fixée sur des pièces tournantes du turboréacteur, notamment des arbres, et donc mobile en rotation autour de son axe.

Les équipements logés dans les enceintes sont lubrifiés et refroidis par de l'huile qui est projetée dans l'enceinte par des gicleurs afin de former un brouillard de gouttelettes en suspension. Les enceintes de lubrification restreignent l'huile autour de l'équipement à lubrifier, afin d'éviter que l'huile ne se déverse dans d'autres secteurs de la turbomachine où elle risque de prendre feu ou qu'elle risque de polluer inutilement, et afin de pouvoir récupérer un maximum d'huile pour la réutiliser. L'enceinte de lubrification est délimitée sur toute sa périphérie par des parois de carter, des parois d'arbre, ou des moyens d'étanchéités disposés entre ces parois. Ces moyens d'étanchéité sont des restrictions de section qui limitent le passage des gaz et des fluides, et sont pressurisés par l'extérieur de l'enceinte. Cette pressurisation induit le passage d'un flux d'air depuis l'extérieur vers l'intérieur de l'enceinte, qui entraine l'huile à travers le moyen d'étanchéité vers l'intérieur de l'enceinte, permettant ainsi de retenir au maximum l'huile à l'intérieur de celle-ci.

On prévoit une pompe de récupération d'huile par enceinte pour évacuer un volume d'huile équivalent à celui qu'on injecte dans l'enceinte via les gicleurs.

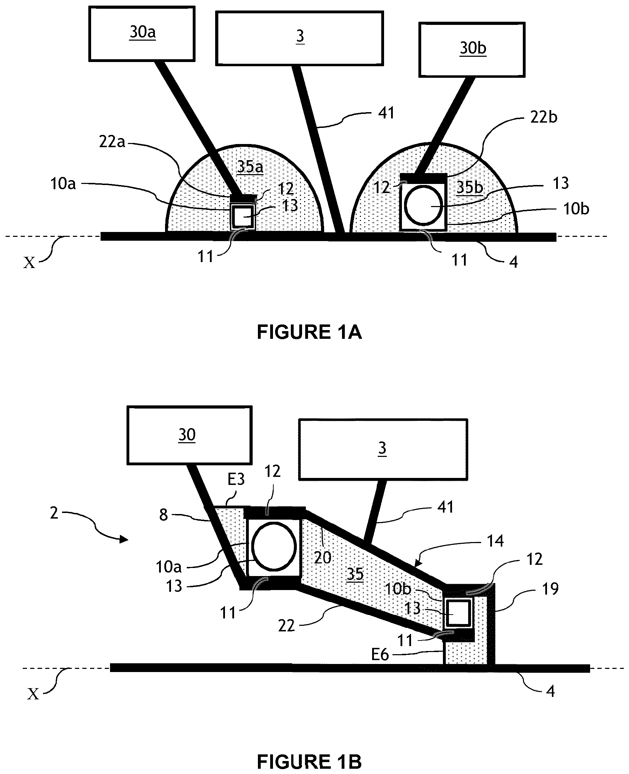

Le schéma de principe de la Figure 1A illustre un agencement classique de l'état de l'art des éléments décrits précédemment.

En référence à la Figure 1A l'ensemble comprend un arbre 4 de rotor d'axe X sensiblement parallèle à l'axe du turboréacteur dans lequel il est destiné à être monté, ainsi qu'un tourillon 41 monté sur l'arbre et qui assure le couplage de l'arbre 4 du rotor et le rotor 3 lui-même. De part et d'autre du tourillon 41 selon l'axe X sont montés sur l'arbre des paliers 10a, 10b permettant de supporter et de guider l'arbre 4.

Les paliers 10a, 10b sont munis d'une bague intérieure 11 et d'une bague extérieure 12, coaxiales, et entre lesquelles sont montés des éléments roulants 13. De préférence, le palier amont 10a est un palier à rouleaux, et le palier aval 10b est un palier à billes.

Dans la suite de la description, les termes « intérieur » et « extérieur » seront utilisés pour définir la position ou la distance d'un élément auquel ils se rapportent, par rapport à l'axe X de l'arbre du rotor. Un élément « intérieur » est ainsi plus proche de l'axe X qu'un élément « extérieur » qui en est plus éloigné.

En ce qui concerne les paliers 10a, 10b, ils sont montés par leur bague intérieure 11 sur l'arbre 4 de rotor, et par leur bague extérieure 12 sur leur support palier 22a, 22b respectif qui relie ledit palier à un carter 30a, 30b du turboréacteur afin d'assurer la fixation du palier au carter.

Chacun des deux paliers 10a, 10b est logé dans une enceinte 35a, 35b respective, les deux enceintes étant distinctes l'une de l'autre. L'espace interne des enceintes 35a, 35b est représenté par un motif à points sur la Figure 1A. Les enceintes forment chacune un anneau séparé axialement autour de l'arbre 4.

Dans cette configuration, les enceintes 35a, 35b sont situées de part et d'autre du tourillon 41 (selon l'axe X) et séparées par le tourillon.

Les deux carters 30a, 30b sont distincts l'un de l'autre, et sont fixés l'un à l'autre extérieurement au rotor 3.

Ces deux carters 30a, 30b risquent dès lors de se désaligner l'un par rapport à l'autre à cause des nécessaires tolérances de fabrication, jeux de montage, et dilatations différentielles de fonctionnement.

De plus, le fait que les paliers 10a, 10b reliés à un même rotor 3 soient reliés à deux carters différents 30a, 30b entraîne de manière inévitable un défaut de concentricité entre ces deux paliers. Ce défaut de concentricité entre les deux paliers 10a, 10b engendre de fortes pré-contraintes dans le rotor 3 et des chargements très forts dans les paliers. Ce défaut de concentricité peut également entrainer une impossibilité de montage du rotor 3 avec les paliers 10a, 10b.

Par ailleurs, le fait que chaque palier, soit logé dans une enceinte qui lui est propre implique de prévoir autant d'appareillage, c'est-à-dire autant de gicleurs, de pompes de récupération d'huile, ou encore d'étanchéités que d'équipements, ce qui engendre une forte augmentation de l'encombrement, de la masse, ainsi que des coûts de fonctionnement du turboréacteur.

Dans le cas d'espèce de la Figure 1A, il est ainsi nécessaire de prévoir deux appareillages, soit notamment deux alimentations d'huile, deux récupérations d'huile, et au moins deux étanchéités.

### EXPOSE DE L'INVENTION

L'invention a donc pour but de remédier aux inconvénients de l'art antérieur en proposant un ensemble pour turbomachine dont l'agencement de ses éléments constitutifs permet d'éviter un défaut de concentricité entre deux paliers reliés à un même rotor.

L'invention vise également à proposer un ensemble pour turbomachine tel que décrit précédemment, dans lequel un tourillon, en particulier le tourillon du compresseur basse pression et le tourillon de la turbine basse pression, est monté entre deux paliers d'un arbre de la turbomachine, afin de maximiser le déplacement radial ou le basculement du rotor, tout en améliorant la dynamique vibratoire, au sein de la turbomachine.

Un autre but de l'invention est de réduire le nombre d'enceintes d'huile habituellement nécessaires pour alimenter en huile les paliers soutenant les arbres haute pression et basse pression de la turbomachine.

L'invention vise en particulier à permettre l'alimentation en huile de plusieurs paliers par une même enceinte de circulation d'huile.

Un autre but de l'invention est réduire le nombre d'appareillages nécessaires à la circulation de l'huile dans les enceintes par rapport à l'existant.

Un autre but de l'invention est de proposer une turbomachine comprenant un tel ensemble, et dont le nombre d'appareillages pour la circulation d'huile, l'encombrement à l'intérieur de la turbomachine, et les coûts de fonctionnement de la turbomachine sont fortement réduits par rapports aux turbomachines existantes.

A cette fin, selon un premier aspect, l'invention propose un ensemble selon les caractéristiques de la revendication 1, comprenant:
- un arbre de rotor de turbomachine, et
- au moins deux paliers permettant de supporter au moins une partie dudit arbre,
caractérisé en ce qu'il comprend un support palier configuré pour être lié à un carter de la turbomachine et qui s'étend entre les bagues intérieures des paliers en étant monté sur celles-ci, ainsi qu'un raccord palier qui est lié à l'arbre du rotor et qui est monté sur les bagues extérieures des paliers en s'étendant entre elles, le support palier et le raccord palier étant communs aux deux paliers et délimitant au moins partiellement ensemble une enceinte de circulation d'huile commune aux deux paliers,

De cette façon, inverser les positions de l'arbre et du support palier par rapport à l'état de l'art permet d'éviter un défaut de concentricité entre les paliers d'un même arbre de rotor, puisque lesdits paliers sont reliés à un même carter.

De plus, l'ensemble pour turbomachine précédent permet d'intégrer les paliers dans une même enceinte, réduisant ainsi de manière significative le nombre d'enceintes logeant les paliers, et dès lors le nombre d'appareillages assurant la circulation de l'huile dans les enceintes, ce qui permet de diminuer l'encombrement intérieur du turboréacteur, ainsi que la masse et par extension les coûts de fonctionnement du turboréacteur.

Bien évidemment, l'ensemble peut comprendre plus de deux paliers. Les paliers peuvent d'ailleurs être indifféremment des paliers à billes, des paliers à rouleaux, ou tout autre type de paliers adaptés au fonctionnement de l'ensemble.

Selon d'autres aspects, l'ensemble proposé présente les différentes caractéristiques suivantes prises seules ou selon leurs combinaisons techniquement possibles :
- le raccord palier se présente sous la forme d'un flasque qui s'étend le long de et autour de l'arbre de rotor en s'évasant, de sorte que le support palier commun est situé entre le raccord palier et l'arbre de rotor ;
- le raccord palier est destiné à être couplé à un rotor par l'intermédiaire d'un tourillon monté autour de l'enceinte, qui s'étend depuis une portion du raccord palier située entre les deux paliers ; le tourillon est dès lors monté entre les deux paliers, ce qui permet de maximiser le déplacement radial ou le basculement du rotor, tout en améliorant la dynamique vibratoire de la turbomachine ;
- le support palier commun est configuré pour être lié à un carter de la turbomachine qui est commun aux paliers ;
- le raccord palier est un raccord palier d'un arbre basse pression d'un compresseur basse pression d'une turbomachine, et les paliers sont des paliers basse pression permettant de supporter ledit raccord palier de l'arbre basse pression du compresseur basse pression de la turbomachine ;
- le support palier est configuré pour être lié à un carter qui est un carter d'entrée ou un carter inter-compresseur d'une turbomachine ;
- le raccord palier est un raccord palier d'un arbre basse pression d'une turbine basse pression d'une turbomachine, et les paliers sont des paliers basse pression permettant de supporter ledit raccord palier de l'arbre basse pression de la turbine basse pression de la turbomachine ;
- le support palier est configuré pour être lié à un carter qui est un carter d'échappement ou un carter inter-turbine d'une turbomachine ;
- l'ensemble comprend en outre un mécanisme de réduction configuré pour coupler l'arbre basse pression du compresseur basse pression avec l'arbre de soufflante, l'enceinte commune logeant les paliers basse pression supportant l'arbre basse pression du compresseur basse pression, le(s) palier(s) de soufflante supportant la soufflante, et le mécanisme de réduction ;
- l'ensemble comprend en outre un arbre haute pression d'une turbine haute pression supporté par au moins un palier haute pression, l'enceinte commune logeant les paliers basse pression supportant l'arbre basse pression de la turbine basse pression et le(s) palier(s) haute pression supportant l'arbre haute pression de la turbine haute pression ;

L'invention propose également une turbomachine comprenant au moins un ensemble précédent. La turbomachine est de préférence un turboréacteur à double flux.

### DESCRIPTION DES FIGURES

D'autres avantages et caractéristiques de l'invention apparaîtront à la lecture de la description suivante donnée à titre d'exemple illustratif et non limitatif, en référence aux Figures annexées qui représentent :
- La Figure 1A, un schéma de principe d'un ensemble comprenant deux paliers soutenant un arbre de rotor selon l'art antérieur ;
- La Figure 1B, un schéma de principe d'un ensemble de deux paliers soutenant un raccord palier lié à un arbre de rotor selon l'invention ;
- La Figure 2, un schéma détaillé d'un ensemble de deux paliers soutenant un raccord palier lié à un arbre de rotor selon l'invention, dans lequel l'ensemble est intégré à la structure d'un turboréacteur et forme une enceinte de circulation d'huile ;
- La Figure 3, une coupe d'une turbomachine comprenant plusieurs ensembles selon l'invention.

### DESCRIPTION DETAILLEE DE L'INVENTION

Les éléments communs aux Figures 1A et 1B portent les mêmes références.

En référence à la Figure 1B, l'ensemble 2 comprend un arbre 4 comprenant un raccord palier 14. Ce dernier se présente avantageusement sous la forme d'un flasque qui s'étend le long de et autour de l'arbre 4 en s'évasant à partir de celui-ci. Le raccord palier 14 de l'arbre forme avantageusement une épingle 19 qui s'étend radialement vers l'extérieur de l'arbre et qui se prolonge en s'évasant selon une extrémité libre 20.

On comprendra que la structure du raccord palier 14 de l'arbre ne se limite pas à celle représentée sur la Figure 1B. On pourra par exemple prévoir que, sur au moins une partie, le raccord palier s'étende de manière parallèle à l'arbre 4.

Le raccord palier 14 peut être d'un seul tenant avec l'arbre 4 ou se présenter sous la forme d'une pièce apte à être reliée à l'arbre 4.

Deux paliers sont montés sur le raccord palier 14, le palier amont 10a au voisinage de l'extrémité libre 20, et le palier aval 10b au voisinage de l'épingle 19 du raccord palier 14.

Les paliers 10a, 10b sont montés par leur bague extérieure 12 sur le raccord palier 14, et par leur bague intérieure 11 à un support palier 22 commun aux deux paliers. Le support palier 22 s'étend entre les deux paliers 10a, 10b de manière à relier lesdits paliers, et se prolonge par un flasque 8 assurant le couplage du support palier 22 à un carter 30 du turboréacteur.

Ainsi, les deux paliers 10a, 10b sont montés, par l'intermédiaire du support palier 22 commun, à un carter 30 unique commun aux deux paliers.

Le raccord palier 14 et le support palier 22 définissent une enceinte 35 de circulation d'huile, incluant des étanchéités E3 et E6, dans laquelle sont logés les deux paliers 10a, 10b. Autrement dit, l'enceinte 35 est ici commune aux deux paliers, lesquels paliers étant dès lors situés entre le raccord palier 14 de l'arbre et le support palier 22. L'espace interne de l'enceinte 35 est représenté par un motif à points sur la Figure 1B.

Dans cette configuration, le tourillon 41 est situé autour de l'enceinte 35 et s'étend radialement depuis une portion du raccord pallier 14 située entre les deux paliers 10a, 10b.

Cet agencement permet de loger les deux paliers 10a, 10b dans une enceinte 35, et de relier les deux paliers à un carter 30 par le biais d'un support palier 22, l'enceinte 35, le carter 30, et le support palier 22 étant chacun uniques et communs aux deux paliers.

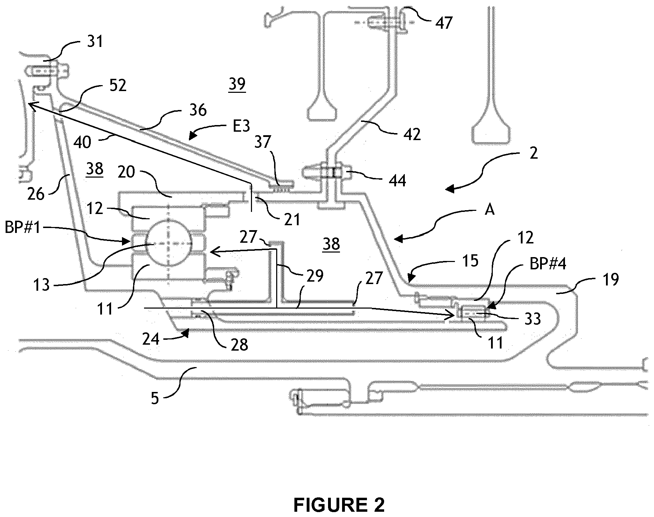

Si l'on souhaite que l'enceinte 35 ne contienne que les deux paliers 10a, 10b, il faut prévoir une première étanchéité E3 (représentée également sur la Figure 2) entre le raccord palier 14 et le flasque 8, ainsi qu'une autre étanchéité E6 entre le support palier 22 et l'arbre 4.

Dès lors, un seul appareillage est nécessaire pour l'ensemble des paliers de l'enceinte, soit notamment une seule alimentation d'huile, une seule récupération d'huile, et une seule étanchéité.

La Figure 2 illustre un exemple de réalisation d'un ensemble 2 comprenant un arbre basse pression 5 d'un compresseur basse pression supporté par des paliers basse pression BP#1 et BP#4. On comprendra que l'arbre basse pression est entrainé par une turbine basse pression et peut entrainer le compresseur basse pression ou à la fois le compresseur basse pression et un réducteur entrainant le fan par exemple.

Le raccord palier 15 est constitué d'une partie épingle 19 et d'une partie d'extrémité libre 20.

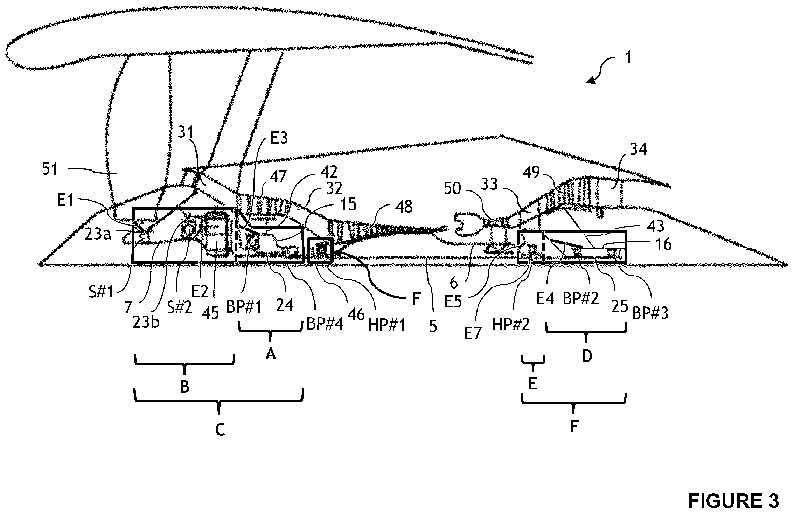

En référence à la Figure 2, le raccord palier 15 de l'arbre basse pression 5 et le support palier 24 définissent une enceinte A de circulation d'huile commune aux deux paliers basse pression BP#1 et BP#4 munis respectivement de billes 13 et de rouleaux 33. L'enceinte A correspond à l'enceinte référencée 35 sur le schéma de principe de la Figure 1B dans le cas d'une enceinte logeant les paliers basse pression BP#1 et BP#4, et est également représentée sur la Figure 3. L'espace interne de l'enceinte A est référencé 38 sur la Figure 2.

Les paliers basse pression BP#1 et BP#4 baignent ainsi dans un brouillard de gouttelettes d'huile.

De manière avantageuse, le palier basse pression BP#1 est monté par sa bague extérieure 12 sur l'extrémité libre 20 du raccord palier 15, et le palier basse pression BP#4 est monté par sa bague extérieure 12 sur l'épingle 19 du raccord palier 15.

Les paliers basse pression BP#1 et BP#4 sont d'autre part montés sur le support palier 24 commun par leur bague intérieure 12 respective, ledit support palier commun s'étendant sensiblement depuis le palier BP#4 jusqu'au carter d'entrée 31 du turboréacteur auquel il est fixé.

L'épingle 19 et l'extrémité libre 20 du raccord palier 15 de l'arbre sont reliées au tourillon 42 du compresseur basse pression 47 où elles se rejoignent, de préférence au moyen d'une bride boulonnée 44 prévue à cet effet, le tourillon réalisant le couplage entre le raccord palier 15 de l'arbre 5 du compresseur basse pression 47 et le compresseur basse pression 47 lui-même.

Le support palier 24 commun réalise la jonction entre le palier basse pression BP#1 et le palier basse pression BP#4, et se prolonge par un flasque 26 qui s'étend radialement depuis le carter d'entrée 31 jusqu'au palier basse pression BP#1.

Par ailleurs, le fonctionnement des billes 13 et des rouleaux 33 des paliers basse pression BP#1 et BP#4 nécessite une circulation d'huile dans l'enceinte. A cet effet, le support palier 24 comprend une entrée d'huile prolongée par un canal 28 permettant d'acheminer l'huile depuis le carter d'entrée 31 à l'intérieur de l'enceinte. De préférence, le canal 28 est aménagé à la jonction des du support palier 24 et du flasque 26. L'huile est injectée dans les billes 13 et les rouleaux 33 des paliers basse pression BP#1 et BP#4 via des gicleurs 27 prévus à cet effet en sortie du canal 28. L'alimentation en huile est représentée par les flèches 29 sur la Figure 2.

L'extrémité libre 20 du raccord palier 15 est munie d'un orifice traversant formant un canal 21 de circulation d'huile permettant de récupérer l'huile ayant circulé dans les billes 13 et les rouleaux 33 des paliers basse pression BP#1 et BP#2. La récupération de l'huile est représentée par la flèche 40 sur la Figure 2.

L'enceinte comprend une étanchéité E3 qui se présente sous la forme d'une branche 36 munie à une de ses extrémités d'un moyen d'étanchéité 37 relié à l'extrémité libre 20 du raccord palier. Le moyen d'étanchéité 37 est avantageusement situé entre le canal 21 de circulation d'huile de l'extrémité libre 20 du raccord palier et le tourillon 42 du compresseur basse pression 47. L'autre extrémité de la branche 36 de l'étanchéité E3 est fixée au carter d'entrée 31.

Le moyen d'étanchéité 37 est une restriction de section entre l'espace interne 38 de l'enceinte dans lequel circule l'huile, et un espace externe 39 à l'enceinte dans lequel circule principalement de l'air. Ce moyen d'étanchéité 37 limite le passage des gaz et des fluides, et est pressurisé par l'espace externe 39 de l'enceinte. La pressurisation est réalisée en apportant de l'air comprimé par la turbomachine autour de l'enceinte d'huile, dans l'espace externe 39, et en récupérant plus de fluide (huile, brouillard d'huile, air) que le volume d'huile apporté à l'enceinte via les gicleurs 27.

Cette pressurisation induit le passage d'un flux d'air depuis l'espace externe 39 vers l'espace interne 38 de l'enceinte, qui entraine l'huile à travers le moyen d'étanchéité 37 vers l'espace interne 38 l'enceinte, permettant ainsi de retenir au maximum l'huile dans ledit espace interne 38.

L'huile longe la branche 36 de l'étanchéité de l'enceinte et sort de l'enceinte par orifice formant un canal 52 aménagé dans la première branche 26 du support palier 24, au voisinage de sa fixation au carter d'entrée 31, pour être acheminée vers un dispositif de récupération et/ou de traitement de l'huile.

Selon un mode de réalisation préféré de l'invention, l'extrémité libre 20 et l'épingle 19 du raccord 15 de l'arbre 5, le support palier commun 24 et le flasque 26, ainsi que la branche 36 de l'étanchéité de l'enceinte se présentent sous la forme de modules destinés à être assemblés les uns aux autres, de manière simple et rapide, afin de former l'ensemble 1.

En accord avec ce qui a été décrit précédemment, on commence par exemple par assembler la bague interne 11 du roulement BP#1 sur le flasque 26 du support palier 24. On monte ensuite les gicleurs 27 dans le canal 28 du support paliers 24. On monte cet ensemble support palier 24 sur le carter d'entrée 31 et avec la branche d'étanchéité 36 si celle-ci n'est pas monobloc avec le support palier 24. On monte ensuite la bille 13 et la bague externe 12 du palier BP#1 avec l'extrémité libre 20 du raccord palier 15. De l'autre côté, on assemble la bague externe 12 et le rouleau 33 du palier BP#4 sur l'épingle 19 du raccord palier 15. On monte ensuite le tourillon 42 sur l'extrémité libre 20, puis l'ensemble de l'épingle 19 équipé du palier BP#4 sur le tourillon 42.

La Figure 3 représente un turboréacteur 1 à double flux intégrant plusieurs ensembles décrits précédemment. La présence de ces ensembles permet de réduire le nombre d'enceintes nécessaires pour loger les différents paliers du turboréacteur. Les différentes enceintes, référencées A, B, C, D, E et F, sont représentées schématiquement sur la Figure 3 par des cadres et sont délimitées par les accolades correspondantes. Elles seront décrites plus en détails dans la suite du présent texte.

Le turboréacteur 1 comprend un arbre basse pression 5 entrainé par une turbine basse pression 49 et entrainant un compresseur basse pression 47, un arbre haute pression 6 entrainé par une turbine haute pression 50 et entrainant un compresseur haute pression 48, ainsi qu'un arbre de soufflante 7 entrainant une soufflante 51.

En ce qui concerne la partie amont du turboréacteur 1, l'arbre de soufflante 7 est soutenu par un palier amont de soufflante S#1 et un palier aval de soufflante S#2, l'arbre basse pression 5 du compresseur basse pression 47 est soutenu par un pallier basse pression amont BP#1 et un palier basse pression aval BP#4, et l'arbre haute pression 6 du compresseur haute pression 48 est soutenu par un palier haute pression amont HP#1 et un palier haute pression aval HP#2 (ce dernier palier sera décrit avec la partie aval du turboréacteur).

Les termes « arbre basse pression du compresseur basse pression (respectivement de la turbine basse pression) » signifient que l'on se situe au niveau de la portion de l'arbre basse pression qui entraine le compresseur basse pression (respectivement qui est entrainée par la turbine basse pression), que l'arbre basse pression comprenne un unique arbre, ou deux arbres dont l'un entraine le compresseur basse pression et l'autre la turbine basse pression. Il en est de même pour le corps haute pression.

Les paliers de soufflante S#1 et S#2 d'une part, et les paliers de compresseur basse pression BP#1 et BP#4 d'autre part, sont séparés par un mécanisme de réduction 45, également appelé « réducteur », permettant de réduire la vitesse de rotation de la soufflante 51. Les paliers de soufflante S#1 et S#2 sont situés en amont du mécanisme de réduction 45, et les paliers de compresseur basse pression BP#1 et BP#2 sont situés en aval du mécanisme de réduction 45.

Chacun des paliers S#1 et S#2 de la soufflante est monté par sa bague extérieure 12 à un support palier 23a, 23b relié au carter d'entrée 31, et par sa bague intérieure 11 à l'arbre 7 de la soufflante 51.

Les paliers basse pression BP#1 et BP#4 sont montés sur un raccord palier 15 de l'arbre 5 du compresseur basse pression 47, et sur un support palier 24 commun, conformément au schéma de principe de la Figure 1B.

Le tourillon 42 du compresseur basse pression 47 est relié au raccord palier 15 de l'arbre, s'étend radialement vers l'extérieur du raccord palier, et assure le couplage entre ledit raccord palier 15 et le compresseur basse pression 47.

Le support palier commun 24 aux paliers BP#1 et BP#4 est quant à lui relié au carter d'entrée 31. Alternativement, il peut être relié au carter inter-compresseur 32.

Le montage des paliers basse pression BP#1 et BP#4, avec le raccord palier 15 de l'arbre 5 du compresseur basse pression 47 et le support palier commun 24 permet de positionner le tourillon 42 du compresseur basse pression 47 autour des paliers, et ainsi de définir une enceinte C commune dans laquelle sont logés lesdits paliers basse pression BP#1 et BP#4, le tourillon 42 étant disposé autour de l'enceinte C, ainsi que les paliers de la soufflante S#1 et S#2, et le réducteur 45.

Le montage des paliers basse pression BP#1 et BP#4 correspond à celui de la Figure 2, et diffère du montage représenté sur la Figure 1b par l'absence de l'étanchéité E6. Dès lors, l'huile circule dans tout le volume interne de l'enceinte, au niveau des paliers basse pression BP#1 et BP#4, des paliers de soufflante S#1 et S#2, et du réducteur 45.

Selon une variante de réalisation, l'enceinte C est divisible en deux enceintes A et B, où l'enceinte A comprend les paliers basse pression BP#1 et BP#4, et l'enceinte B comprend les paliers de soufflante S#1 et S#2 et le réducteur 45. Les enceintes A et B s'étendent en aval et en amont respectivement de la séparation schématique en trait pointillés.

L'enceinte C est munie de trois étanchéités, E1, E2, E3, qui marquent une séparation entre l'espace intérieur de enceinte C et des zones de circulation d'air voisines. Elles permettent d'empêcher l'huile présente dans l'enceinte de pénétrer dans une zone d'air voisine et inversement.
- L'étanchéité E1 correspond à la séparation entre l'arbre 7 de la soufflante 51 et le carter d'entrée 31.
- L'étanchéité E2 correspond à la séparation entre l'arbre 7 de la soufflante 51 et l'arbre basse pression 5 du compresseur basse pression 47.
- L'étanchéité E3 correspond à la séparation entre l'arbre basse pression 5 du compresseur basse pression 47 et le carter d'entrée 31, et correspond à l'étanchéité 37 représenté sur la Figure 2.

En ce qui concerne la partie aval du turboréacteur 1, l'arbre basse pression 5 de la turbine basse pression 49 est soutenu par un palier basse pression amont BP#2 et un palier basse pression aval BP#3, et l'arbre haute pression 6 de la turbine haute pression 50 est soutenu par un palier haute pression amont HP#1 et un palier haute pression aval HP#2.

Le palier haute pression HP#1 est situé à proximité du palier basse pression BP#4 et d'un engrenage 46 configuré pour prélever la puissance sur l'arbre haute pression 6. De manière classique, le palier haute pression HP#1 et l'engrenage 46 sont logés dans une enceinte F commune.

L'invention n'est bien sûr pas limitée à la partie amont du réacteur, notamment au montage du compresseur basse pression tel que décrit précédemment, mais également à d'autres ensembles rotatifs de la turbomachine tel que le montage de la turbine basse pression décrit dans la suite du présent texte. Les différents éléments du montage du compresseur basse pression que sont les paliers basse pression BP#1 et BP#4, le support palier 24, le raccord palier 15, le tourillon 42, et le carter d'entrée 31, sont alors transposés aux éléments du montage de la turbine basse pression que sont respectivement les paliers basse pression BP#2 et BP#3, le support palier 25, le raccord palier 16, le tourillon 43, et le carter inter-turbine 33.

L'invention peut par ailleurs s'appliquer à plusieurs ensembles rotatifs de la turbomachine.

Dès lors, l'invention peut s'appliquer par exemple au compresseur basse pression, ou à la turbine basse pression, ou encore à la fois au compresseur basse pression et à la turbine basse pression de la turbomachine.

Les paliers basse pression BP#2 et BP#3 sont montés sur le raccord palier 16 de l'arbre 5 de la turbine basse pression 49, et sur le support palier 25 commun, conformément au schéma de principe de la Figure 1B.

Le tourillon 43 de la turbine basse pression 49 est relié au raccord palier 16 de l'arbre, s'étend vers l'extérieur du raccord palier, et assure le couplage entre ledit raccord palier 16 et la turbine basse pression 49.

Le support palier 25 commun aux paliers BP#2 et BP#3 est quant à lui relié au carter inter-turbine 33. Alternativement, il peut être relié au carter d'échappement 34.

Le montage des paliers basse pression BP#2 et BP#3 avec le raccord palier 16 et le support palier commun 25 permet de positionner le tourillon 43 de la turbine basse pression vers l'extérieur des paliers, et ainsi de définir une enceinte F commune dans laquelle sont logés lesdits paliers basse pression BP#2 et BP#3, le tourillon 43 étant hors de l'enceinte F, ainsi que le palier haute pression HP#2 de la turbine haute pression.

Le montage des paliers basse pression BP#2 et BP#3 correspond à celui des paliers basse pression BP#1 et BP#4 de la Figure 2, compte-tenu de la transposition des éléments du montage du compresseur basse pression aux éléments du montage de la turbine basse pression, ainsi que décrite précédemment. L'enceinte F ne comprend pas d'étanchéité semblable à E6 entre le support palier 25 et l'arbre basse pression 5, et l'huile circule ainsi dans tout le volume interne de l'enceinte, au niveau des paliers basse pression BP#1 et BP#4, et du palier haute pression HP#2.

Selon une variante de réalisation, l'enceinte F est divisible en deux enceintes D et E, où l'enceinte D comprend les paliers basse pression BP#2 et BP#3, et l'enceinte E comprend le palier haute pression HP#2 de la turbine haute pression. Les enceintes D et E s'étendent en aval et en amont respectivement de la séparation schématique en trait pointillés.

Selon une variante de réalisation, les paliers basse pression BP#2 et BP#3 ainsi que le palier haute pression HP#2 de la turbine haute pression sont logés dans une enceinte E commune.

Comme l'illustre la Figure 3, l'enceinte F est avantageusement munies d'une ou plusieurs des étanchéités E4, E5, et E7 suivantes :
- L'étanchéité E4 correspond à la séparation entre l'arbre basse pression 5 de la turbine basse pression 49 et le carter inter-turbine 33.
- L'étanchéité E5 correspond à la séparation entre l'arbre haute pression 6 de la turbine haute pression 50 et le carter inter-turbine 33.
- L'étanchéité E7 correspond à la séparation entre l'arbre basse pression 5 et l'arbre haute pression 6.

Les enceintes A, B, C, D, E, et F peuvent être ventilées ou non ventilées.

Par enceinte non ventilée (« non vented » en anglais), on comprendra ici une enceinte qui n'est pas directement en communication fluidique avec l'air libre et qui ne comprend pas de tube de dégazage. A cet effet, une pompe de récupération d'huile connectée à un port de récupération, peut être placée au point bas du moteur afin de récupérer l'huile et l'air de l'enceinte non ventilée et créer ainsi une aspiration d'air à travers les joints d'étanchéité de l'enceinte. La pompe a avantageusement un débit de pompage supérieur à celui de l'arrivée d'huile dans l'enceinte permettant la lubrification des paliers et le cas échéant du réducteur.

Par enceinte ventilée (« vented » en anglais), on comprendra ici une enceinte susceptible d'être en communication avec l'air libre tout en étant maintenue à une pression proche, mais supérieure, de la pression atmosphérique pour forcer l'évacuation d'air. Les paliers à l'intérieur de telles enceintes sont baignés par un brouillard d'huile qui est extrait de l'enceinte en continu par un tube de dégazage, l'air et l'huile étant séparés dans un déshuileur. Dans une telle enceinte, la pompe de récupération a un débit de pompage sensiblement égal à celui de l'arrivée d'huile dans l'enceinte (via les gicleurs). Par ailleurs, il est possible d'avoir des flux d'air passant à travers les étanchéités amont et aval de l'enceinte, lesdits flux d'air ayant une pression supérieure ou égale à celle régnant dans l'enceinte.

Dans un mode de réalisation, lorsque l'enceinte comprend au plus deux étanchéités, l'enceinte est de préférence non ventilée. De même, lorsque l'enceinte comprend plus de deux étanchéités, l'enceinte est ventilée.

Typiquement, l'enceinte C est de préférence ventilée, dans la mesure où elle comprend les étanchéités E1, E2, et E3 décrites précédemment.

## Revendications

1. Ensemble (2) pour turbomachine, comprenant :
- un arbre (4) de rotor (3) de turbomachine (1), et
- au moins deux paliers (10a, 10b) permettant de supporter au moins une partie dudit arbre,
**caractérisé en ce qu'**il comprend un support palier (22) configuré pour être lié à un carter (30) de la turbomachine et qui s'étend entre les bagues intérieures (11) des paliers (10a, 10b) en étant monté sur celles-ci, ainsi qu'un raccord palier (14) qui est lié à l'arbre (4) du rotor (3) et qui est monté sur les bagues extérieures (12) des paliers (10a, 10b) en s'étendant entre elles, le support palier (22) et le raccord palier (14) étant communs aux deux paliers (10a, 10b) et délimitant au moins partiellement ensemble une enceinte (35) de circulation d'huile commune aux deux paliers (10a, 10b).

2. Ensemble (2) selon la revendication 1, **caractérisé en ce que** le raccord palier (14) se présente sous la forme d'un flasque (14) qui s'étend le long de et autour de l'arbre (4) de rotor (3) en s'évasant, de sorte que le support palier (22) commun est situé entre le raccord palier (14) et l'arbre (4) de rotor (3).

3. Ensemble (2) selon l'une des revendications précédentes, **caractérisé en ce que** le raccord palier (14) est destiné à être couplé à un rotor (3) par l'intermédiaire d'un tourillon (41) monté autour de l'enceinte (35), qui s'étend depuis une portion du raccord palier (14) située entre les deux paliers (10a, 10b).

4. Ensemble (2) selon l'une des revendications précédentes, **caractérisé en ce que** le support palier (22) commun est configuré pour être lié à un carter (30) de la turbomachine qui est commun aux paliers (10a, 10b).

5. Ensemble (2) selon l'une des revendications précédentes, **caractérisé en ce que** l'arbre (4) de rotor (3) est un arbre basse pression (5) configuré pour coopérer avec un compresseur basse pression (47) de la turbomachine, le raccord palier (14) est un raccord palier (15) dudit arbre basse pression (5), et les paliers sont des paliers basse pression (BP#1, BP#4) permettant de supporter ledit raccord palier (15).

6. Ensemble (2) selon l'une des revendications 1 à 4, **caractérisé en ce que** l'arbre (4) de rotor (3) est un arbre basse pression (5) configuré pour coopérer avec une turbine basse pression (49) de la turbomachine, le raccord palier (14) est un raccord palier (16) dudit arbre basse pression (5), et les paliers (10a, 10b) sont des paliers basse pression (BP#2, BP#3) permettant de supporter ledit raccord palier (16).

7. Ensemble (2) selon les revendications 4 et 5, **caractérisé en ce qu'**il comprend en outre un mécanisme de réduction (45) configuré pour coupler l'arbre basse pression (5) avec un arbre (7) de soufflante (51) de la turbomachine, l'enceinte (35, C) commune logeant les paliers basse pression (BP#1, BP#4) supportant l'arbre basse pression (5), un ou plusieurs palier(s) (S#1, S#2) de soufflante supportant la soufflante (51), et le mécanisme de réduction (45).

8. Ensemble (2) selon la revendication 6, **caractérisé en ce qu'**il comprend en outre un arbre haute pression (6) configuré pour coopérer avec une turbine haute pression (50) de la turbomachine, ledit arbre haute pression (6) étant supporté par au moins un palier haute pression (HP#2), l'enceinte (35, F) commune logeant les paliers basse pression (BP#2, BP#3) supportant l'arbre basse pression (5) et le(s) palier(s) haute pression (HP#2) supportant l'arbre haute pression (6).

9. Turbomachine (1) **caractérisée en ce qu'**elle comprend un ensemble (2) selon l'une quelconque des revendications précédentes.

10. Turbomachine (1) selon la revendication 9, ladite turbomachine étant un turboréacteur à double flux.

## Patentansprüche

1. Gruppe (2) für Turbomaschine, umfassend:
- eine Welle (4) des Rotors (3) der Turbomaschine (1) und;
- wenigstens zwei Lager (10a, 10b), die das Tragen wenigstens eines Teils der genannten Welle zu ermöglichen,
**dadurch gekennzeichnet, dass** sie einen Lagerträger (22) umfasst, der ausgestaltet ist, um mit einem Gehäuse (30) der Turbomaschine verbunden zu sein und der sich zwischen den Innenringen (11) der Lager (10a, 10b) erstreckt und dabei auf diesen montiert ist, sowie einen Lageranschluss (14), der mit der Welle (4) des Rotors (3) verbunden ist und der auf den Außenringen (12) der Lager (10a, 10b) montiert ist, indem er sich zwischen ihnen erstreckt, wobei der Lagerträger (22) und der Lageranschluss (14) den zwei Lagern (10a, 10b) gemeinsam sind und wenigstens teilweise gemeinsam eine den zwei Lagern (10a, 10b) gemeinsame Einfassung (35) des Ölumlaufs begrenzen.

2. Gruppe (2) gemäß Anspruch 1, **dadurch gekennzeichnet, dass** der Lageranschluss (14) die Form eines Flansches (14) aufweist, der sich entlang der Welle (4) des Rotors (3) und umgebend erstreckt und sich dabei derart aufweitet, dass der gemeinsame Lagerträger (22) zwischen dem Lageranschluss (14) und der Welle (4) des Rotors (3) angeordnet ist.

3. Gruppe (2) gemäß einem der voranstehenden Ansprüche, **dadurch gekennzeichnet, dass** der Lageranschluss (14) dazu bestimmt ist, mittels eines Zapfens (41), der um die Einfassung (35) montiert ist, die sich von einem Abschnitt des Lageranschlusses (14) erstreckt, der zwischen den zwei Lagern (10a, 10b) angeordnet ist, an einen Rotor (3) gekoppelt zu sein.

4. Gruppe (2) gemäß einem der voranstehenden Ansprüche, **dadurch gekennzeichnet, dass** der gemeinsame Lagerträger (22) ausgestaltet ist, um mit einem Gehäuse (30) der Turbomaschine verbunden zu sein, das den Lagern (10a, 10c) gemeinsam ist.

5. Gruppe (2) gemäß einem der voranstehenden Ansprüche, **dadurch gekennzeichnet, dass** die Welle (4) des Rotors (3) eine Niedrigdruck-Welle (5) ist, die ausgestaltet ist, um mit einem Niedrigdruck-Kompressor (47) der Turbomaschine zusammenzuwirken, wobei der Lageranschluss (14) ein Lageranschluss (15) der genannten Niedrigdruckwelle (5) ist und die Lager Niedrigdrucklager (BP#1, BP#4) sind, die das Tragen des genannten Lageranschlusses (15) zulassen.

6. Gruppe (2) gemäß einem der Ansprüche 1 bis 4, **dadurch gekennzeichnet, dass** die Welle (4) des Rotors (3) eine Niedrigdruckwelle (5) ist, die zum Zusammenwirken mit einer Niedrigdruckturbine (49) der Turbomaschine ausgestaltet ist, der Lagerträger (14) ein Lagerträger (16) der genannten Niedrigdruckwelle (5) ist und die Lager (10a, 10b) Niedrigdrucklager (BP#2, BP#3) sind, die das Tragen des genannten Lageranschlusses zulassen.

7. Gruppe (2) gemäß Anspruch 4 und 5, **dadurch gekennzeichnet, dass** sie darüber hinaus einen Untersetzungsmechanismus (45) umfasst, der zum Koppeln der Niedrigdruckwelle (5) mit einer Welle (7) eines Gebläses (51) der Turbomaschine ausgestaltet ist, wobei die gemeinsame Einfassung (35, C) die Niedrigdrucklager (BP#1, BP#4), die die Niedrigdruckwelle (5) tragen, wobei ein oder mehrere Lager (S#1, S#2) des Gebläses das Gebläse (51) tragen, und den Untersetzungsmechanismus (45) aufnimmt.

8. Gruppe (2) gemäß Anspruch 6, **dadurch gekennzeichnet, dass** sie darüber hinaus eine Hochdruckwelle (6) umfasst, die zum Zusammenwirken mit einer Hochdruckturbine (50) der Turbomaschine ausgestaltet ist, wobei die genannte Hochdruckwelle (6) von wenigstens einem Hochdrucklager (HP#2) getragen ist, wobei die gemeinsame Einfassung (35, F) die Niedrigdruckwelle (5) trägt und das (die) Hochdrucklager (HP#2) die Hochdruckwelle (6) trägt (tragen).

9. Turbomaschine (1), **dadurch gekennzeichnet, dass** sie eine Gruppe (2) gemäß irgendeinem der voranstehenden Ansprüche umfasst.

10. Turbomaschine (1) gemäß Anspruch 9, wobei die genannte Turbomaschine ein Doppelstrom-Turboreaktor ist.

## Claims

1. Assembly (2) for a turbine engine, comprising:
- a rotor (3) shaft (4) of a turbine engine (1), and
- at least two bearings (10a, 10b) making it possible to support at least one portion of said shaft,
**characterised in that** it comprises a bearing support (22) configured to be connected to a casing (30) of the turbine engine and which extends between the inner rings (11) of the bearings (10a, 10b) by being mounted on the latter, as well as a bearing coupler (14) which is connected to the rotor (3) shaft (4) and which is mounted on the outer rings (12) of the bearings (10a, 10b) by extending between them, the bearing support (22) and the bearing coupler (14) being common to the two bearings (10a, 10b) and delimiting at least partially together a chamber (35) for the circulation of oil common to the two bearings (10a, 10b) .

2. Assembly (2) according to claim 1, **characterised in that** the bearing coupler (14) has the form of a flange (14) which extends along and around the rotor (3) shaft (4) by flaring out, in such a way that the common bearing support (22) is located between the bearing coupler (14) and the rotor (3) shaft (4).

3. Assembly (2) according to one of the preceding claims, **characterised in that** the bearing coupler (14) is intended to be coupled to a rotor (3) through a trunnion (41) mounted around the chamber (35), which extends from a portion of the bearing coupler (14) located between the two bearings (10a, 10b) .

4. Assembly (2) according to one of the preceding claims, **characterised in that** the common bearing support (22) is configured to be connected to a casing (30) of the turbine engine which is common to the bearings (10a, 10b).

5. Assembly (2) according to one of the preceding claims, **characterised in that** the rotor (3) shaft (4) is a low-pressure shaft (5) configured to cooperate with a low pressure compressor (47) of the turbine engine, the bearing coupler (14) is a bearing coupler (15) of said low-pressure shaft (5), and the bearings are low-pressure bearings (BP#1, BP#4) that make it possible to support said bearing coupler (15).

6. Assembly (2) according to one of claims 1 to 4, **characterised in that** the rotor (3) shaft (4) is a low-pressure shaft (5) configured to cooperate with a low-pressure turbine (49) of the turbine engine, the bearing coupler (14) is a bearing coupler (16) of said low-pressure shaft (5), and the bearings (10a, 10b) are low-pressure bearings (BP#2, BP#3) that make it possible to support said bearing coupler (16).

7. Assembly (2) according to claims 4 and 5, **characterised in that** it further comprises a reduction mechanism (45) configured to couple the low-pressure shaft (5) with a fan (51) shaft (7) of the turbine engine, the common chamber (35, C) housing the low-pressure bearings (BP#1, BP#4) supporting the low-pressure shaft (5) one or several fan bearings (S#1, S#2) supporting the fan (51), and the reduction mechanism (45).

8. Assembly (2) according to claim 6, **characterised in that** it further comprises a high-pressure shaft (6) configured to cooperate with a high-pressure turbine (50) of the turbine engine, said high-pressure shaft (6) being supported by at least one high-pressure bearing (HP#2), the common chamber (35, F) housing the low-pressure bearings (BP#2, BP#3) that supports the low-pressure shaft (5) and the high-pressure bearing or bearings (HP#2) supporting the high-pressure shaft (6).

9. Turbine engine (1) **characterised in that** it comprises an assembly (2) according to any preceding claim.

10. Turbine engine (1) according to claim 9, said turbine engine being a bypass turbine engine.
